# EUROPEAN PATENT APPLICATION

(11) **EP 3 865 604 A1**
(43) Date of publication of application: **18.08.2021**
(21) Application number: 21156962.9
(22) Date of filing: 12.02.2021
(51) Int. Cl.: C23C 30/00, C23C 28/02, C25D 7/00

(54) **THERMALLY STABLE NICKEL-PHOSPHORUS ALLOY FOR HIGH TEMPERATURE APPLICATIONS**

(30) Priority: 14.02.2020 US 202016791059
(71) Applicant: Raytheon Technologies Corporation, Farmington, CT 06032 (US)
(72) Inventor: JIN, Lei, Unionville, CT Connecticut 06085 (US); BRODEUR, Ryan M., Southwick, MA Massachusetts 01077 (US); SANNIGRAHI, Poulomi, Glastonbury, CT Connecticut 06033 (US)
(74) Representative: Dehns

(57) **Abstract**

A nickel-phosphorus alloy coating (58) comprising a substrate (52) having a surface (54); a nickel phosphorus alloy coating (58) plated to the surface (54), the nickel phosphorus alloy (58) consisting of phosphorus from 15.0 wt. percent to 20.9 wt. percent.

## Description

### BACKGROUND

The present disclosure (invention) is directed to a nickel-phosphorus (Ni-P) alloy coating having a phosphorus content higher than 15 weight percent.

Plating and coating with nickel-phosphorus alloys has been utilized for decades due to the unique properties those coatings possess, such as corrosion resistance and wear resistance. However, Ni-P alloys coatings currently available are not thermally stable. This is due to the hardness of the coating significantly dropping when the coatings are heat treated at temperatures higher than 900 degrees Fahrenheit (482 degrees Celsius). Thus current nickel-phosphorus coatings are not suitable for application in environments higher than 900 degrees Fahrenheit (482 degrees Celsius).

### SUMMARY

According to an aspect of the present invention, there is provided a nickel-phosphorus alloy coating comprising a substrate having a surface; a nickel phosphorus alloy coating plated to the surface, the nickel phosphorus alloy consisting of phosphorus from 15.0 wt. percent to 20.9 wt. percent.

Optionally, the nickel-phosphorus alloy coating further comprises a base layer plated to the surface between the nickel phosphorus alloy coating and the surface.

Optionally, the base layer comprises a nickel strike layer.

Optionally, the nickel phosphorus alloy coating includes a hardness of above 800 (HV) with a 15.8 weight percent of phosphorus after a heat treatment.

Optionally, the nickel phosphorus alloy coating includes a hardness of above 900 (HV) with a 16.7 weight percent of phosphorus after a heat treatment.

Optionally, the nickel phosphorus alloy coating is configured for wear protection and hot corrosion protection at temperatures higher than 900 degrees Fahrenheit (482 degrees Celsius).

Optionally, the nickel phosphorus alloy coating is configured for gas turbine engine parts that run at temperatures greater than 900F (482C).

According to another aspect of the present invention, there is provided a process for protecting a gas turbine engine component that operates in an environment with temperatures greater than 900 degrees Fahrenheit (482 degrees Celsius) comprising plating at least one of a base layer or a surface of the component with a nickel phosphorus alloy coating, the nickel phosphorus alloy consisting of phosphorus from 15.0 wt. percent to 20.9 wt. percent.

Optionally, the process further comprises, prior to the step of plating with the nickel phosphorus alloy, plating the base layer to the surface.

Optionally, the base layer comprises a nickel strike layer.

Optionally, the nickel phosphorus alloy coating includes a hardness of above 800 (HV) with a 15.8 weight percent of phosphorus after a heat treatment.

Optionally, the nickel phosphorus alloy coating includes a hardness of above 900 (HV) with a 16.7 weight percent of phosphorus after a heat treatment.

Optionally, the nickel phosphorus alloy coating is configured for wear protection at temperatures higher than 900 degrees Fahrenheit.

Optionally, the nickel phosphorus alloy coating is configured for hot corrosion protection at temperatures higher than 900 degrees Fahrenheit (482 degrees Celsius).

Other details of the nickel-phosphorus (Ni-P) alloy coating are set forth in the following detailed description and the accompanying drawings wherein like reference numerals depict like elements.

### BRIEF DESCRIPTION OF THE DRAWINGS

FIG. 1 is a simplified cross-sectional view of a gas turbine engine.
Fig. 2 is a cross sectional schematic of an exemplary coating system.
Fig. 3 is a graph representing test results of the exemplary coating system.

### DETAILED DESCRIPTION

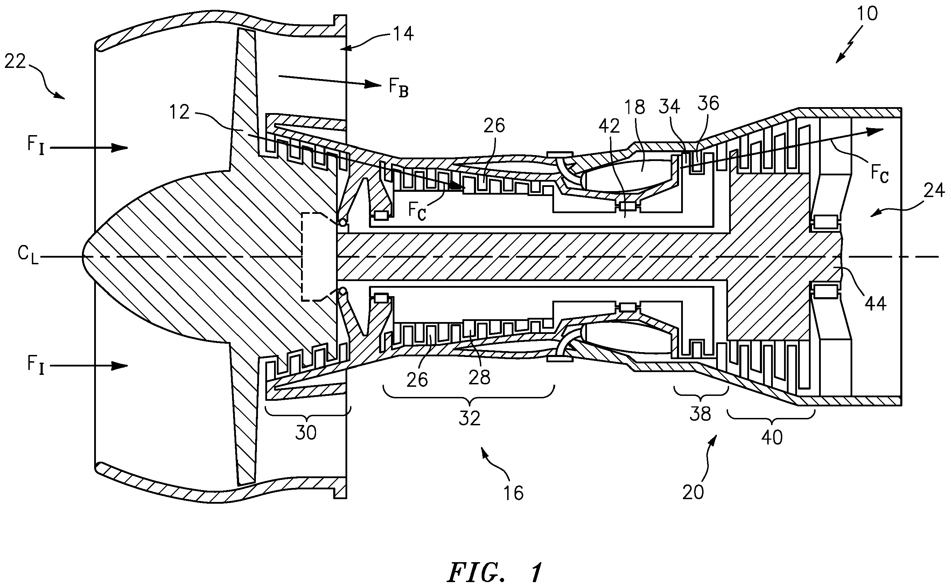

FIG. 1 is a simplified cross-sectional view of a gas turbine engine 10 in accordance with embodiments of the present disclosure. Turbine engine 10 includes fan 12 positioned in bypass duct 14. Turbine engine 10 also includes compressor section 16, combustor (or combustors) 18, and turbine section 20 arranged in a flow series with upstream inlet 22 and downstream exhaust 24. During the operation of turbine engine 10, incoming airflow F_{I} enters inlet 22 and divides into core flow F_{C} and bypass flow F_{B}, downstream of fan 12. Core flow F_{C} continues along the core flowpath through compressor section 16, combustor 18, and turbine section 20, and bypass flow F_{B} proceeds along the bypass flowpath through bypass duct 14.

Compressor 16 includes stages of compressor vanes 26 and blades 28 arranged in low pressure compressor (LPC) section 30 and high pressure compressor (HPC) section 32. Turbine section 20 includes stages of turbine vanes 34 and turbine blades 36 arranged in high pressure turbine (HPT) section 38 and low pressure turbine (LPT) section 40. HPT section 38 is coupled to HPC section 32 via HPT shaft 42, forming the high pressure spool. LPT section 40 is coupled to LPC section 30 and fan 12 via LPT shaft 44, forming the low pressure spool. HPT shaft 42 and LPT shaft 44 are typically coaxially mounted, with the high and low pressure spools independently rotating about turbine axis (centerline) C_{L}.

Combustion gas exits combustor 18 and enters HPT section 38 of turbine 20, encountering turbine vanes 34 and turbines blades 36. Turbine vanes 34 turn and accelerate the flow of combustion gas, and turbine blades 36 generate lift for conversion to rotational energy via HPT shaft 42, driving HPC section 32 of compressor 16. Partially expanded combustion gas flows from HPT section 38 to LPT section 40, driving LPC section 30 and fan 12 via LPT shaft 44. Exhaust flow exits LPT section 40 and turbine engine 10 via exhaust nozzle 24. In this manner, the thermodynamic efficiency of turbine engine 10 is tied to the overall pressure ratio (OPR), as defined between the delivery pressure at inlet 22 and the compressed air pressure entering combustor 18 from compressor section 16. As discussed above, a higher OPR offers increased efficiency and improved performance. It will be appreciated that various other types of turbine engines can be used in accordance with the embodiments of the present disclosure.

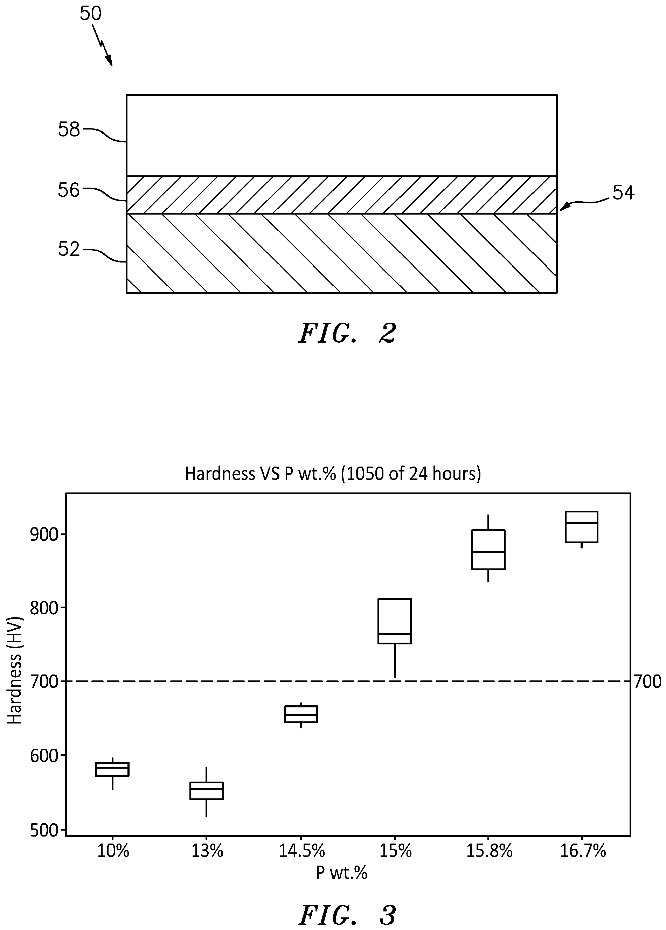

Figure 2 shows a schematic cross section of an exemplary component 50 with a nickel phosphorus coating.

The component 50 can include a part of the gas turbine engine 10 located in the compressor section 16, turbine section 20 and the like. The component 50 can be located in sections of the engine 10 that experience temperatures of 900 degrees Fahrenheit (482 degrees Celsius) or greater. In an exemplary embodiment the component 50 can be a high pressure turbine 1^{st} stage air seal (components exposed to ∼ 1200F (∼ 649C)), a bearing housing and sleeve and the like (can experience 900 degrees Fahrenheit (482 degrees Celsius) for several hours during assembly).

The component 50 can have a substrate 52 having a surface 54 with a base layer 56. The base layer 56 can comprise a strike layer. The strike layer 56 can comprise a nickel material, nickel alloy material and the like.

A nickel phosphorus coating 58 is coupled to the base layer 56. In an exemplary embodiment, the nickel phosphorus coating 58 can be coupled directly to the surface 54 of the substrate 52.

The nickel phosphorus coating 58 can comprise a composition that includes greater than 15 weight percent of phosphorus. In an exemplary embodiment, the nickel phosphorus coating 58 can comprise a composition that includes between 15.0 weight percent to 20.9 weight percent of phosphorus. In an exemplary embodiment, the nickel phosphorus coating 58 can comprise a composition that includes from between 15.8 weight percent to 16.7 weight percent of phosphorus.

Figure 3 shows a graph that demonstrates the effectiveness of the exemplary coating 58. The hardness (HV) is on the Y-axis and the weight percentage of phosphorus in the composition of the coating 58 is on the X-axis. The hardness is expressed as a Vickers Pyramid Number (HV) which is a common measure of hardness to test a material's ability to resist plastic deformation. The test(s), represented by the results shown in the graph at Fig. 3, were conducted at a temperature of 1050 degrees Fahrenheit (566 degrees Celsius) for a twenty-four hour duration. As can be seen at Fig. 3, the coating 58 can include a hardness of above 875 (HV) with a 15.8 weight percent of phosphorus and a hardness of about 920 (HV) with a 16.7 weight percent of phosphorus.

The 15.0 weight percent of phosphorus to about 20.9 weight percent phosphorus composition in the nickel phosphorus coating 58 demonstrates a critical value and resultant hardness values of from above 800 HV to above 900 HV that is unexpected. The ultra-high phosphorus (15.0 wt% to 20.9 wt%) nickel alloy electrolytic plating/coating 58 produces high hardness (875 to 900 HV) at high temperatures (1050 F (566 C)).

Ni-P alloy with P% between 15.0% and 20.9% would provide an alloy composition of between Ni₃P (15.0%P) and Ni₂P (20.9%P). These types of alloys would avoid the presence of pure nickel in the alloy material layer. Presence of pure nickel in Ni-P alloy can decrease the thermal stability as well as melting points of the alloy.

Prior chemical plating/coating of Ni-P alloy philosophy has considered a phosphorous 15 weight percent to be the effective upper limit for nickel phosphorus coating systems. Applicants have discovered that including a phosphorous of 15 weight percent or lower in the composition of the Ni-P alloy coating opens the door for the presence of pure nickel leading to poor durability. The poor durability in the coating is amplified at the temperatures higher than 900 degrees Fahrenheit (482 degrees Celsius).

The coating 58 can be coupled to the surface 54 or base layer 56 by being applied via electrolytic plating techniques.

The nickel-phosphorus (Ni-P) alloy coating system disclosed provides the technical advantage including wear protection and hot corrosion protection at temperatures higher than 900 degrees Fahrenheit (482 degrees Celsius).

Another technical advantage of the nickel-phosphorus (Ni-P) alloy coating system disclosed includes coating gas turbine engine parts that run at high temperatures (> 900F (482C)) to provide hot corrosion protection.

Another technical advantage of the nickel-phosphorus (Ni-P) alloy coating system disclosed avoids the presence of pure nickel in the alloy material layer.

Another technical advantage of the nickel-phosphorus (Ni-P) alloy coating system disclosed includes use for repairs for dimensional restoration on high temperature parts.

Another technical advantage of the nickel-phosphorus (Ni-P) alloy coating system disclosed includes application for non-line of sight areas which cannot be restored using plasma spray techniques.

Another technical advantage of the nickel-phosphorus (Ni-P) alloy coating system disclosed includes an additional option for applications that require corrosion and wear protection for parts that operate at high temperature.

There has been provided a nickel-phosphorus (Ni-P) alloy coating system. While the nickel-phosphorus (Ni-P) alloy coating system has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A nickel-phosphorus alloy coating (58) comprising:
a substrate (52) having a surface (54);
a nickel phosphorus alloy coating (58) plated to said surface (54), said nickel phosphorus alloy (58) consisting of phosphorus from 15.0 wt. percent to 20.9 wt. percent.

2. The nickel-phosphorus alloy coating (58) according to claim 1, further comprising:
a base layer (56) plated to said surface (54) between said nickel phosphorus alloy coating (58) and said surface (54).

3. The nickel-phosphorus alloy coating (58) according to claim 2, wherein said base layer (56) comprises a nickel strike layer.

4. The nickel-phosphorus alloy coating (58) according to claim 1, 2, or 3, wherein said nickel phosphorus alloy coating (58) includes a hardness of above 800 (HV) with a 15.8 weight percent of phosphorus after a heat treatment.

5. The nickel-phosphorus alloy coating (58) according to any preceding claim, wherein said nickel phosphorus alloy coating (58) includes a hardness of above 900 (HV) with a 16.7 weight percent of phosphorus after a heat treatment.

6. The nickel-phosphorus alloy coating (58) according to any preceding claim, wherein said nickel phosphorus alloy coating (58) is configured for wear protection and hot corrosion protection at temperatures higher than 900 degrees Fahrenheit (482 degrees Celsius).

7. The nickel-phosphorus alloy coating (58) according to any preceding claim, wherein said nickel phosphorus alloy coating (58) is configured for gas turbine engine parts that run at temperatures greater than 900 degrees Fahrenheit (482 degrees Celsius).

8. A process for protecting a gas turbine engine component (50) that operates in an environment with temperatures greater than 900 degrees Fahrenheit (482 degrees Celsius) comprising:
plating at least one of a base layer (56) or a surface (54) of said component (50) with a nickel phosphorus alloy coating (58), said nickel phosphorus alloy consisting of phosphorus from 15.0 wt. percent to 20.9 wt. percent.

9. The process of claim 8, further comprising:
prior to the step of plating with said nickel phosphorus alloy, plating said base layer (56) to said surface (54).

10. The process of claim 9, wherein said base layer (56) comprises a nickel strike layer.

11. The process of claim 8, 9 , or 10, wherein said nickel phosphorus alloy coating (58) includes a hardness of above 800 (HV) with a 15.8 weight percent of phosphorus after a heat treatment.

12. The process of any of claims 8 to 11, wherein said nickel phosphorus alloy coating (58) includes a hardness of above 900 (HV) with a 16.7 weight percent of phosphorus after a heat treatment.

13. The process of any of claims 8 to 12, wherein said nickel phosphorus alloy coating (58) is configured for wear protection at temperatures higher than 900 degrees Fahrenheit (482 degrees Celsius).

14. The process of any of claims 8 to 13, wherein said nickel phosphorus alloy coating (58) is configured for hot corrosion protection at temperatures higher than 900 degrees Fahrenheit (482 degrees Celsius).
